# EUROPEAN PATENT APPLICATION

(11) **EP 2 202 824 A1**
(43) Date of publication of application: **30.06.2010**
(21) Application number: 09717152.4
(22) Date of filing: 21.01.2009
(51) Int. Cl.: H01M 2/10

(54) **BATTERY MODULE AND BATTERY PACK USING SAID BATTERY MODULE**

(30) Priority: 04.03.2008 JP 2008052998
(71) Applicant: Panasonic Corporation, Kadoma-shi Osaka 571-8501 (JP)
(72) Inventor: Hirakawa Yasushi, Chuo-ku,Osaka-shi ,Osaka 540-6207 (JP); Hajime NISHINO, Osaka 540-6207 (JP)
(74) Representative: Schwabe - Sandmair - Marx
(86) International application number: PCT/JP2009/000194
(87) International publication number: WO 2009/110167

(57) **Abstract**

A battery module includes a first enclosure, a second enclosure, and a plurality of batteries having vent holes accommodated between the first and second enclosures, and has a configuration in which a first partition member for accommodating the batteries individually at a position facing the battery vent holes in at least one of the first enclosure and the second enclosure is provided.

## Description

### TECHNICAL FIELD

The present invention relates to a battery module in which a failure such as heat generation occurring in one battery does not affect other batteries, and a battery pack using the battery module.

### BACKGROUND ART

Recently, from the viewpoint of resource savings and energy savings, demands for secondary batteries such as nickel hydrogen, nickel cadmium and lithium ion secondary batteries, which can be used repeatedly, are increased. Among them, the demand for the lithium ion secondary battery is expanded as a driving power source for various kinds of portable electronic apparatuses and mobile telecommunication apparatuses, for example, portable telephones, digital cameras, video cameras, and notebook-sized personal computers, and the like, because the lithium ion secondary battery has high electromotive force and large energy density although it has light weight. On the other hand, in order to reduce the amount of fossil fuel to be used and the exhaustion amount of CO₂, a battery module is developed as a power source for driving a motor of an automobile or the like. The battery modules are combined so as to be capable of obtaining a desirable voltage and volume.

In the development thereof, with the trend toward large energy density of batteries, a battery itself may generate heat to high temperatures depending upon forms of use. Therefore, not only the safety of the battery itself but also the safety of a battery module and a battery pack using assembly of the batteries becomes more important.

In the above-mentioned batteries, the internal pressure of the battery is increased by a gas generated by overcharge, internal short-circuit or external short-circuit and a battery case may occasionally be ruptured. Therefore, in general, these batteries are provided with a vent mechanism, a vent hole, or the like, for extracting gases.

Conventionally, an example of a battery pack is disclosed. The battery pack includes rechargeable batteries, a filter part adsorbing inflammable materials, and an outer member covering the batteries and the filter part and having an exhaust hole from which contents filtered after passing through the filter part are exhausted to the outside is disclosed. This battery pack is capable of preventing smoke generation and ignition of the battery even if the contents are discharged from the battery (for example, Patent Document 1).

Furthermore, an example of a battery module individually accommodating batteries in a square-shaped battery accommodation part of a holder case made of synthetic resin is disclosed (for example, Patent Document 2).

However, in the battery pack disclosed in Patent Document 1, when a vent mechanism is operated due to a failure of one battery, it is not possible to prevent the surrounding batteries from being deteriorated consecutively by the ignition and rupture due to the blowout of gas. Therefore, in particular, in a battery module and a battery pack using a plurality of batteries, how to suppress the influence of the failure of one battery on the surrounding batteries is a problem to be solved.

Furthermore, in the battery module disclosed in Patent Document 2, the batteries can be connected stably by individually accommodating the batteries in the battery accommodation part. Furthermore, the battery module can hold the batteries in the battery accommodation part without shaking even under vibration or shock. In addition, the document discloses that uniform cooling can be carried out due to securing a cooling passage by heat radiation holes provided in the height direction of the batteries. However, the document does not disclose how to prevent the effect of one battery on the surrounding batteries if the one battery generates heat abnormally to cause ignition and rupture.
Patent Document 1: Japanese Patent Unexamined Publication No. 2006-228610
Patent Document 2: Japanese Patent Unexamined Publication No. 2003-162993

### SUMMARY OF THE INVENTION

A battery module of the present invention includes a first enclosure, a second enclosure, and a plurality of batteries each having a vent hole and which are accommodated between the first enclosure and the second enclosure. A first partition member is provided to individually accommodate the batteries at a position facing the vent holes of the batteries in at least one of the first enclosure and the second enclosure.

With this configuration, the first partition member receives flame or the like produced by ignition of gas emitted from a vent hole of a battery with a failure, thus preventing the flame from directly striking the surrounding batteries. As a result, it is possible to prevent fire from spreading to the surrounding batteries, to prevent abnormal overheating of the surrounding batteries, and the like. Thereby, a battery module excellent in reliability and safety can be achieved.

Furthermore, the present invention has a configuration in which the above-mentioned battery modules are connected in tandem or in parallel as unit battery modules. Thus, fire cannot easily be spread between the unit battery modules even when the unit battery modules are stacked with each other, and a battery module having high safety and reliability can be achieved. Therefore, a battery module corresponding to a required voltage or a volume can be arbitrarily configured.

Furthermore, a battery pack of the present invention has a configuration in which the above-mentioned battery modules are accommodated in an exterior enclosure. Thus, a battery pack having a high versatility can be achieved.

### BRIEF DESCRIPTION OF THE DRAWINGS

Fig. 1 is a cross-sectional view of a battery to be accommodated in a battery module in accordance with a first exemplary embodiment of the present invention.
Fig. 2A is an exploded perspective view of the battery module in accordance with the first exemplary embodiment of the present invention.
Fig. 2B is a perspective view of the battery module in accordance with the first exemplary embodiment of the present invention.
Fig. 3A is an exploded perspective view of another example of a battery module in accordance with the first exemplary embodiment of the present invention.
Fig. 3B is a perspective view of another example of a battery module in accordance with the first exemplary embodiment of the present invention.
Fig. 4A is an exploded perspective view of a battery module in accordance with a second exemplary embodiment of the present invention.
Fig. 4B is a perspective view of the battery module in accordance with the second exemplary embodiment of the present invention.
Fig. 5A is an exploded perspective view of another example of a battery module in accordance with the second exemplary embodiment of the present invention.
Fig. 5B is a perspective view of another example of a battery module in accordance with the second exemplary embodiment of the present invention.
Fig. 6A is an exploded perspective view of a battery module in accordance with a third exemplary embodiment of the present invention.
Fig. 6B is a perspective view of the battery module in accordance with the third exemplary embodiment of the present invention.
Fig. 7A is an exploded perspective view of a battery module in accordance with a fourth exemplary embodiment of the present invention.
Fig. 7B is a perspective view of the battery module in accordance with the fourth exemplary embodiment of the present invention.
Fig. 8A is an exploded perspective view of another example of a battery module in accordance with the fourth exemplary embodiment of the present invention.
Fig. 8B is a perspective view of another example of a battery module in accordance with the fourth exemplary embodiment of the present invention.
Fig. 9A is an exploded perspective view of a battery module in accordance with a fifth exemplary embodiment of the present invention.
Fig. 9B is a perspective view of the battery module in accordance with the fifth exemplary embodiment of the present invention.
Fig. 10A is an exploded perspective view of another example of a battery module in accordance with the fifth exemplary embodiment of the present invention.
Fig. 10B is a perspective view of another example of a battery module in accordance with the fifth exemplary embodiment of the present invention.
Fig. 11A is an exploded perspective view of a battery module in accordance with a sixth exemplary embodiment of the present invention.
Fig. 11B is a perspective view of the battery module in accordance with the sixth exemplary embodiment of the present invention.
Fig. 12A is an exploded perspective view of another example of a battery module in accordance with the sixth exemplary embodiment of the present invention.
Fig. 12B is a perspective view of another example of a battery module in accordance with the sixth exemplary embodiment of the present invention.
Fig. 13A is a plan view of a battery module seen from the direction in which batteries are accommodated in accordance with a seventh exemplary embodiment of the present invention, showing a state in which unit battery modules are connected in tandem in two stages.
Fig. 13B is a plan view of another battery module seen from the direction in which batteries are accommodated in accordance with the seventh exemplary embodiment of the present invention, showing a state in which unit battery modules are connected in tandem in two stages and in parallel in two rows.
Fig. 14 is a perspective plan view of a battery pack in accordance with an eighth exemplary embodiment of the present invention.

### REFERENCE MARKS IN THE DRAWINGS

- 1: positive electrode
- 1a: positive current collector
- 1b: positive electrode layer
- 2: negative electrode
- 3: separator
- 4: electrode group
- 5: battery case
- 6, 1132: sealing plate
- 7: gasket
- 8: positive electrode lead
- 9: negative electrode lead
- 10a, 10b: insulating plate
- 11: negative current collector
- 15: negative electrode layer
- 16: positive electrode cap
- 17, 935: vent hole
- 18: current breaking member
- 19, 1035, 1135: vent mechanism
- 100, 200, 300, 400, 500, 600, 700, 800,:
- 900, 1000, 1100, 1200, 1300: battery module
- 110, 210, 310, 410, 510, 610,:
- 710, 810, 1010, 1110: first enclosure
- 114: first coupling section
- 115, 215, 315, 415, 515,:
- 615, 715, 815, 1115: first partition member
- 120, 220, 320, 420, 520,:
- 620, 720, 820, 1020, 1120: second enclosure
- 122, 222, 1022: second connection terminal
- 124: second coupling section
- 130, 330, 430, 530, 630,:
- 830, 930, 1030, 1130: battery
- 225, 325, 425, 525, 625,:
- 725, 825, 1025, 1125: second partition member
- 350, 550, 1150: air hole
- 360: gas
- 835: explosion-proof valve
- 1012: first connection terminal
- 1250: exhaust flow passage
- 1400: battery pack
- 1500: exterior enclosure

### DETAILED DESCRIPTION OF THE PREFERRED EMBODIMENT

Hereinafter, exemplary embodiments of the present invention are described with reference to drawings in which the same reference numerals are given to the same components. Note here that the present invention is not limited to the embodiments mentioned below as long as it is based on the basic features described in the description. Furthermore, in the below description, a non-aqueous electrolyte secondary battery (hereinafter, referred to as a "battery") such as a lithium ion battery is described as an example of a battery. However, the battery is not limited to this example.

### FIRST EXEMPLARY EMBODIMENT

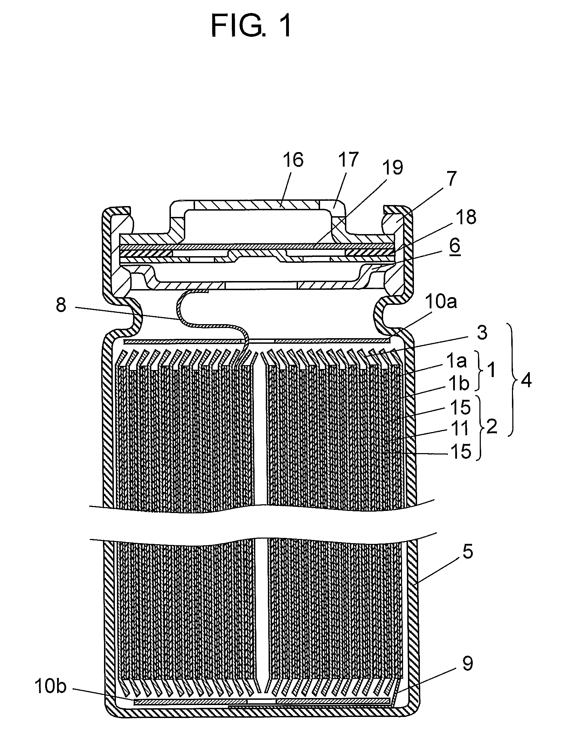

Fig. 1 is a cross-sectional view showing a battery accommodated in a battery module in accordance with a first exemplary embodiment of the present invention.

As shown in Fig. 1, a cylindrical battery has electrode group 4 in which positive electrode 1 provided with positive electrode lead 8 made of, for example, aluminum and negative electrode 2 facing positive electrode 1 and provided with positive electrode lead 9 made of, for example, copper at one end are wound together with separator 3 interposed therebetween. Then, insulating plates 10a and 10b are mounted on the upper and lower parts of electrode group 4, which are inserted into battery case 5. The other end of positive electrode lead 8 is welded on sealing plate 6 and the other end of negative electrode lead 9 is welded on the bottom of battery case 5. Furthermore, a non-aqueous electrolyte (not shown) conducting lithium ion is injected into battery case 5. Then, an open end of battery case 5 is caulked with respect to positive electrode cap 16, current breaking member 18 such as a PTC element, and sealing plate 6 via gasket 7. Furthermore, positive electrode cap 16 is provided with vent hole 17 for extracting a gas generated when vent mechanism 19 is opened due to a failure of electrode group 4. Positive electrode 1 includes positive current collector 1a and positive electrode layer 1b containing a positive electrode active material.

Herein, positive electrode layer 1b includes a lithium-containing composite oxide such as LiCoO₂, LiNiO₂, and Li₂MnO₄, or a mixture thereof or a composite compound thereof, as the positive electrode active material. Positive electrode layer 1b further includes a conductive agent and a binder. As the conductive agent, positive electrode layer 1b may include graphite such as natural graphite and artificial graphite; and carbon black such as acetylene black, Ketjen black, channel black, furnace black, lampblack, thermal black, and the like. As the binder, positive electrode layer 1b may include PVDF, polytetrafluoroethylene, polyethylene, polypropylene, aramid resin, polyamide, polyimide, and the like.

As positive current collector 1a used in positive electrode 1, aluminum (Al), carbon, conductive resin, and the like, can be used.

As the non-aqueous electrolyte, an electrolyte solution obtained by dissolving a solute in an organic solvent, or a so-called a polymer electrolyte layer including the electrolyte solution and immobilized by a polymer can be used. The solute of the nonaqueous electrolyte includes LiPF₆, LiBF₄, LiClO₄, LiAlCl₄, LiSbF₆, LiSCN, LiCF₃SO₃, LiN(CF₃CO₂), LiN(CF₃SO₂)₂, and the like. An example of the organic solvent may include ethylene carbonate (EC), propylene carbonate, butylene carbonate, vinylene carbonate, dimethyl carbonate (DMC), diethyl carbonate, ethyl methyl carbonate (EMC), and the like.

As negative current collector 11 of negative electrode 2, a metal foil of, for example, stainless steel, nickel, copper, and titanium, and a thin film of carbon and conductive resin can be used.

As negative electrode layer 15 of negative electrode 2, negative electrode active materials capable of reversibly absorbing and releasing lithium ions can be used. For example, carbon materials such as graphite, and negative electrode active materials having a theoretical capacity density of more than 833 mAh/cm³, such as silicon (Si), tin (Sn), and the like, can be used.

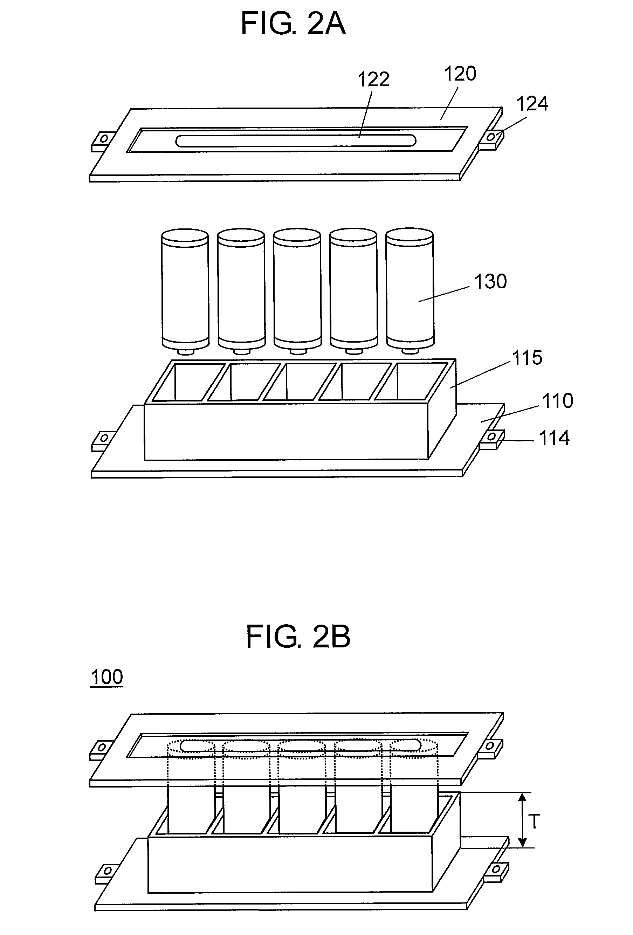

Hereinafter, a battery module in accordance with the first exemplary embodiment of the present invention is described in detail with reference to Figs. 2A and 2B.

Fig. 2A is an exploded perspective view of a battery module in accordance with the first exemplary embodiment of the present invention, and Fig. 2B is a perspective view of the battery module in accordance with the first exemplary embodiment of the present invention. Note here that Fig. 2B shows a state in which batteries are shown as transparent images so that the state can be understood easily.

As shown in Fig. 2A, battery module 100 includes first enclosure 110 and second enclosure 120 which are made of an insulating resin material such as polycarbonate resin, and a plurality of batteries 130 incorporated between first enclosure 110 and second enclosure 120. First enclosure 110 has first partition member 115 at a position facing a vent hole of each of batteries 130. Battery module 100 has a battery arrangement in which, for example, batteries 130 are connected in parallel to each other. Furthermore, a first connection terminal (not shown) and second connection terminal 122 for electrically connecting batteries 130 are connected to first enclosure 110 and second enclosure 120 by, for example, a spot welding, respectively. When a plurality of battery modules 100 are coupled in, for example, tandem or parallel, first enclosure 110 and second enclosure 120 are provided with first coupling section 114 and second coupling section 124, respectively. Note here that first coupling section 114 is electrically connected to the first connection terminal and second coupling section 124 is electrically connected to second connection terminal 122. That is, first and second coupling sections 114 and 124 may be used as an electric connection part used for connection to the other battery modules.

Then, as shown in Fig. 2B, batteries 130 are accommodated in first partition member 115 of first enclosure 110 at the vent hole side thereof, and the first connection terminal (not shown) and the positive electrode caps of batteries 130 are connected to each other. In addition, second connection terminal 122 of second enclosure 120 and the battery cases (specifically, the negative side) of batteries 130 are connected to each other. Thus, battery module 100 is configured. Height (depth) T of first partition member 115 may be not lower than the height capable of accommodating at least vent hole part of battery 130 and not higher than the height of battery 130. For example, when the battery has an outer diameter of 18 mm and height of 65 mm, height T is in the range of 2 mm ≤ T ≤ 65 mm.

According to this exemplary embodiment, even if the temperature of one battery becomes higher due to abnormality and a high-temperature gas is emitted from the vent hole, it is possible to prevent the high-temperature gas from directly striking the surrounding batteries with the first partition member. As a result, it is possible to effectively prevent surrounding batteries from becoming higher in temperature consecutively. Furthermore, as the first partition member is higher, the radiant heat radiated from the side surface of the battery case can be blocked reliably, and therefore, the influence on the surrounding batteries can be suppressed.

Note here that this exemplary embodiment describes an example in which the battery module is configured by connecting the first enclosure and the second enclosure to the batteries. However, the configuration is not necessarily limited to this example. For instance, a battery module may have a configuration in which a first enclosure and a second enclosure are securely fixed via a supporting member (not shown) whose height is about the same as that of the batteries.

Furthermore, this exemplary embodiment describes an example in which the first and second enclosures and the first partition member are made of a heat-resistant member such as polycarbonate resin having a heat resistance of, for example, about 200°C. However, the configuration is not necessarily limited to this example. For example, only the first enclosure provided with the first partition member may be made of a heat-resistant member and the second enclosure may be made of a resin member such as polypropylene (PP) and polyethylene (PE) having a low heat resistance of, for example, around 100°C. Thus, the production cost can be reduced.

Herein, as the heat-resistant member, the following material can be used: polyphenylene sulfide (PPS) resin, polycarbonate (PC) resin, polyether ether ketone (PEEK) resin, phenol resin, UNILATE (TM), glass epoxy resin, ceramic, and resin foam. It is preferable that the above-mentioned resin contains filler such as carbon fiber and glass fiber. Thus, the mechanical strength of the enclosure can be improved by the filler to be contained. Alternatively, metal materials such as aluminum (Al), copper (Cu), iron (Fe), and nickel (Ni), which are coated with insulating resin, may be used. The metal material may have a plate shape or a mesh (network) shape. When the metal material has a mesh shape, high mechanical strength and light enclosure can be achieved. Furthermore, as an insulating resin, a heat-resistant member may not necessarily be used, and insulating resin that is cheaper and can be easily formed may be used.

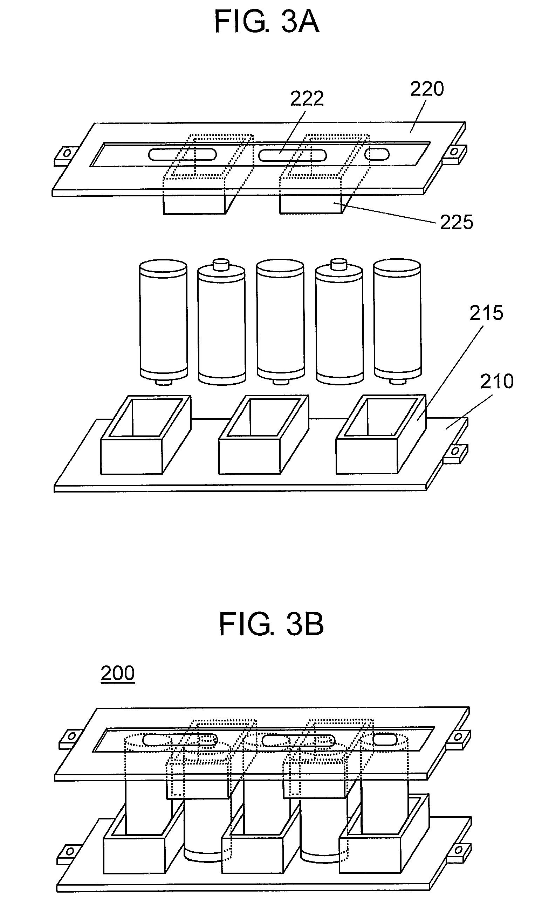

Hereinafter, another example of a battery module in accordance with the first exemplary embodiment of the present invention is described with reference to Figs. 3A and 3B.

Fig. 3A is an exploded perspective view of another example of a battery module in accordance with the first exemplary embodiment of the present invention. Fig. 3B is a perspective view of the example of the battery module in accordance with the first exemplary embodiment of the present invention. Note here that Fig. 3B also shows a state in which batteries are shown as transparent images so that the state can be understood easily.

As shown in Fig. 3A, battery module 200 has a configuration in which a plurality of batteries 130 are accommodated in first enclosure 210 and second enclosure 220 in such an arrangement that the vent holes of batteries 130 are located in the opposite sides from each other. Battery module 200 is different from battery module 100 of the above-mentioned exemplary embodiment in that first partition members 215 and second partition members 225 are provided at the positions corresponding to the vent holes of the batteries on first enclosure 210 and second enclosure 220, respectively. That is to say, battery module 200 is an example in which a plurality of batteries are connected in series. Thus, neighboring two batteries are connected to each other at first connection terminals (not shown) or second connection terminals 222.

In this case, first enclosure 210, second enclosure 220, first partition member 215 and second partition member 225 are made of the same heat-resistant member as that of first enclosure 110 and first partition member 115 of battery module 100. Since other components are the same as those of battery module 100, the description thereof is omitted herein.

According to the later example of this exemplary embodiment, even if the temperature of one battery becomes higher due to abnormality and a high-temperature gas is emitted from the vent hole, it is possible to prevent the high-temperature gas from directly striking the surrounding batteries by the first and second partition members. As a result, it is possible to effectively prevent surrounding batteries from becoming higher in temperature consecutively. ***SECOND EXEMPLARY EMBODIMENT***

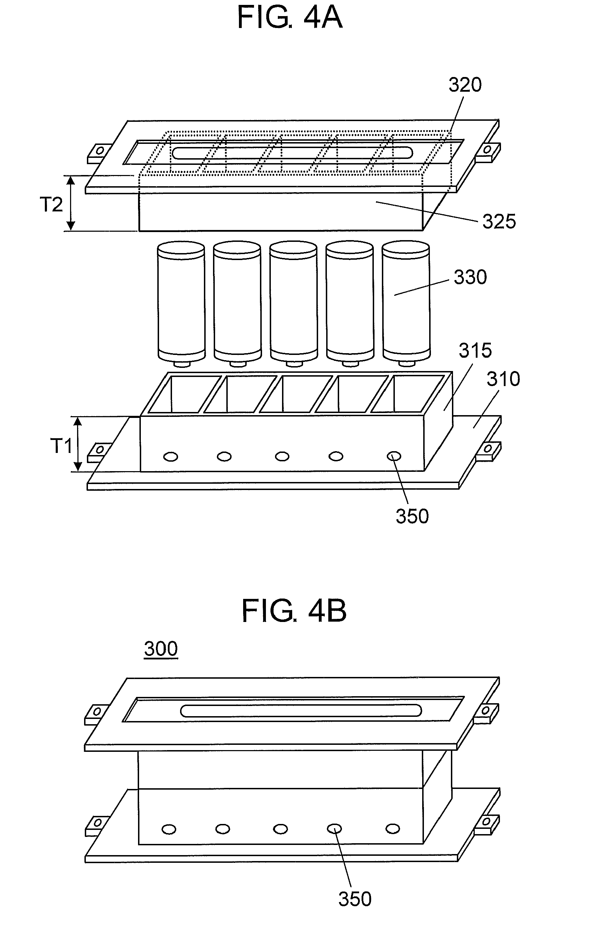

Hereinafter, a battery module in accordance with a second exemplary embodiment of the present invention is described in detail with reference to Figs. 4A and 4B.

Fig. 4A is an exploded perspective view of a battery module in accordance with a second exemplary embodiment of the present invention. Fig. 4B is a perspective view of the battery module in accordance with the second exemplary embodiment of the present invention.

As shown in Fig. 4A, in battery module 300, first enclosure 310 is provided with first partition member 315 and second enclosure 320 is provided with second partition member 325 corresponding to each of a plurality of batteries 330 to be accommodated. This exemplary embodiment is different from the first exemplary embodiment in that air holes 350 are provided on the outer wall of any one of first partition member 315 and second partition member 325 in vicinity of the vent holes of batteries 330. Furthermore, the total of height T1 (depth) of first partition member 315 and height T2 (depth) of second partition member 325 is made to be at least the height of battery 330, and thereby the entire batteries 330 can be accommodated.

Figs. 4A and 4B show an example in which a plurality of batteries 330 are connected in parallel and the vent holes of batteries 330 is disposed so as to face first partition member 315 of first enclosure 310. Therefore, first enclosure 310 and first partition member 315 are required to be made of a heat-resistant member such as polyphenylene sulfide resin having a heat resistance of about 200°C. On the other hand, for the second enclosure and second partition member 325, a member having a low heat resistance of around 100°C, for example, polyethylene resin may be used.

Since other components are the same as those of battery module 100, the description thereof is omitted herein.

According to this exemplary embodiment, even if the temperature of one of the batteries becomes higher due to abnormality and a high-temperature gas is emitted from the vent hole, the gas is exhausted from the air hole and the first and second partition members can prevent the gas from directly striking the surrounding batteries. Furthermore, since each of the batteries is completely accommodated by the first and second enclosures, so that the radiant heat radiated from the side surface of the battery cases can be reliably blocked. Therefore, it is possible to further suppress the influence on the surrounding batteries.

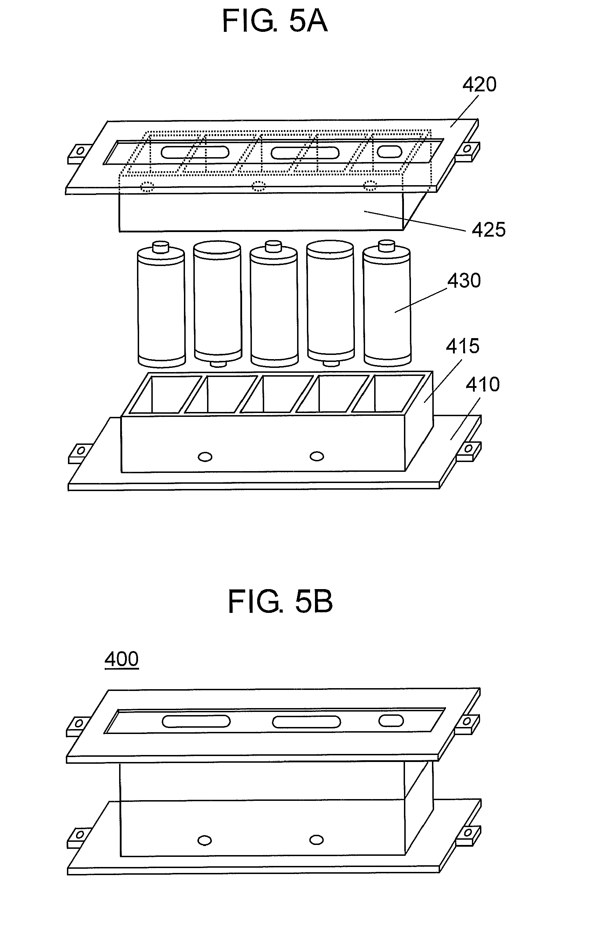

Note here that the above-mentioned exemplary embodiment descries an example of the battery module in which a plurality of batteries are connected in parallel. However, the configuration is not necessarily limited to this example. For example, a plurality of batteries 430 are connected in series as shown in Fig. 5A to thus form battery module 400 shown in Fig. 5B. In this case, first enclosure 410, first partition member 415, second enclosure 420 and second partition member 425 are required to be made of a heat-resistant member such as polycarbonate resin having a heat resistance of, for example, about 200°C. Since other components are the same as those of battery module 300, the description thereof is omitted herein.

According to the above-mentioned configuration, it is possible to achieve battery module 400 capable of obtaining the same effect as that in the second exemplary embodiment and excellent in versatility.

### THIRD EXEMPLARY EMBODIMENT

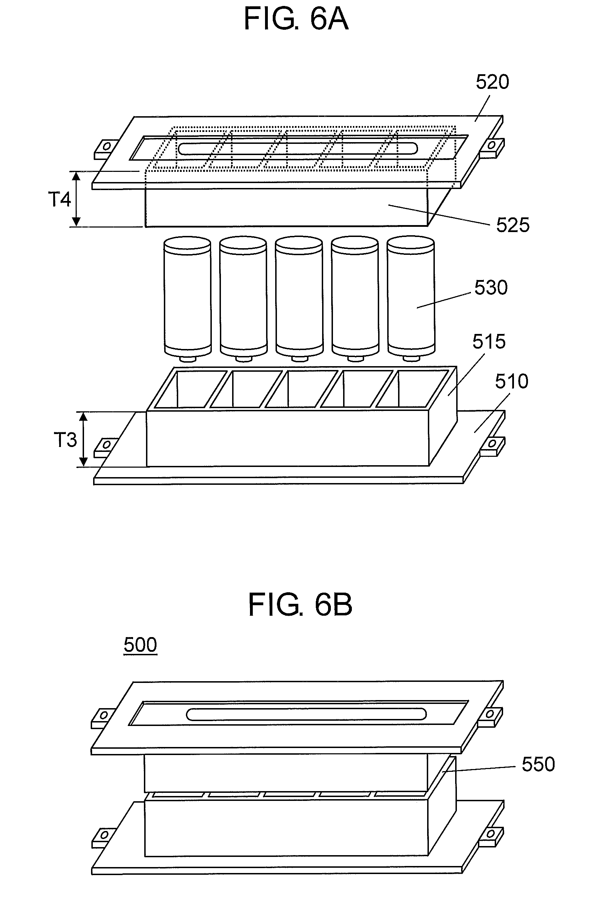

Hereinafter, a battery module in accordance with a third exemplary embodiment of the present invention is described in detail with reference to Figs. 6A and 6B.

Fig. 6A is an exploded perspective view of a battery module in accordance with the third exemplary embodiment of the present invention. Fig. 6B is a perspective view of the battery module in accordance with the third exemplary embodiment of the present invention.

As shown in Fig. 6B, the battery module of this exemplary embodiment is different from the battery module in the second exemplary embodiment in that the total of height T3 (depth) of first partition member 515 and height T4 (depth) of second partition member 525 is made to be smaller than the height of the batteries and the difference (gap) between the total and the height of the battery is used as an air hole.

That is to say, as shown in Fig. 6A, battery module 500 has a configuration in which first enclosure 510 is provided with first partition member 515 corresponding to each of a plurality of batteries 530 to be accommodated and second enclosure 520 is provided with second partition member 525 corresponding to each of a plurality of batteries 530 to be accommodated. The total of height T3 (depth) of first partition member 515 and height T4 (depth) of second partition member 525 is not higher than the height of battery 530 and the difference (gap) between the total and the height of battery 530 is used as air hole 550.

In this configuration, it is important that the height of the first partition member or the second partition member facing the vent holes of the batteries is not lower than the height capable of accommodating the vent holes of the batteries.

Since other components are the same as those of battery module 400, the description thereof is omitted herein.

According to this exemplary embodiment, even if the temperature of the battery becomes higher due to abnormality and a high-temperature gas is emitted from the vent hole, the gas is exhausted from the air hole formed by the difference between the height of the batteries and the total heights of the first and second partition members, and the first and second partition members can prevent the gas from directly striking the surrounding batteries. As a result, a battery module having excellent reliability and safety can be achieved.

The above-mentioned exemplary embodiment describes an example in which a gap as air hole 550 is formed on the entire periphery of the batteries. However, the configuration is not necessarily limited to this example. For example, the total heights of the walls of the first and second partition members between the neighboring batteries may be about the height of the batteries. Thus, the radiant heat radiated from the side surface of the battery case of a battery with a failure to the neighboring batteries can be considerably reduced.

### FOURTH EXEMPLARY EMBODIMENT

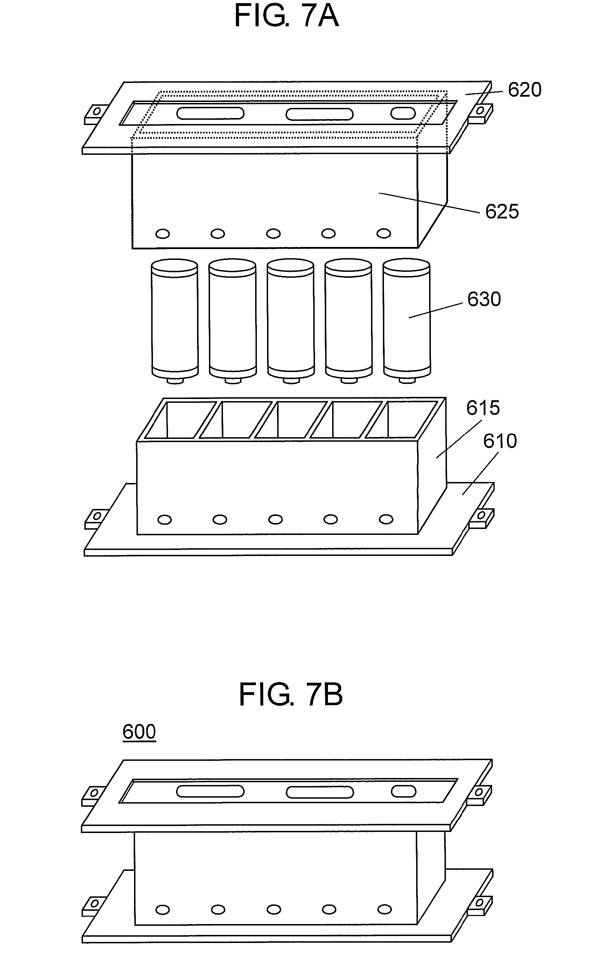

Hereinafter, a battery module in accordance with a fourth exemplary embodiment of the present invention is described in detail with reference to Figs. 7A and 7B.

Fig. 7A is an exploded perspective view of a battery module in accordance with the fourth exemplary embodiment of the present invention. Fig. 7B is a perspective view of the battery module in accordance with the fourth exemplary embodiment of the present invention.

As shown in Fig. 7B, battery module 600 includes second partition member 625 of second enclosure 620 provided corresponding to first partition member 615 of first enclosure 610 individually accommodating a plurality of batteries 630. This exemplary embodiment is different from the second exemplary embodiment in that second partition member 625 has a structure capable of accommodating the entire first partition member 615. The total of the height of first partition member 615 and that of second partition member 625 is not lower than the height of the batteries. In other words, batteries 630 are accommodated in a state in which first partition member 615 and second partition member 625 are partially overlapped with each other.

It is preferable that air holes are provided at positions in which the first partition member and the second partition member are overlapped with each other when the height (depth) of second partition member 625 is in the same level as the height of the battery. However, when the height of the second partition member is lower than that of the battery and when there is a gap in the portion in which the first partition member and the second partition member are overlapped with each other, the gap can be used as an air hole. In this case, an air hole may not be particularly provided in each partition member.

According to this exemplary embodiment, double partitions are provided by the first and second partition members. Therefore, a battery module having more excellent reliability and safety can be achieved.

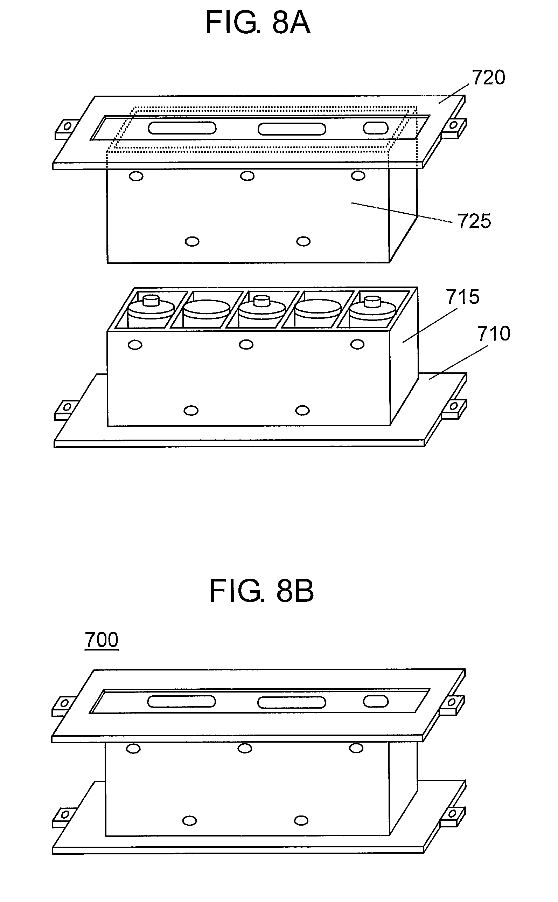

This exemplary embodiment describes an example of a battery module having a configuration in which a plurality of batteries are connected in parallel. However, the configuration is not necessarily limited to this example. For example, as shown in Figs. 8A and 8B, battery module 700 may be configured by connecting a plurality of batteries in series. In this case, the same effect can be obtained. In this configuration, first enclosure 710, first partition member 715, second enclosure 720 and second partition member 725 are required to be made of a heat-resistant member that is excellent in heat resistance.

### FIFTH EXEMPLARY EMBODIMENT

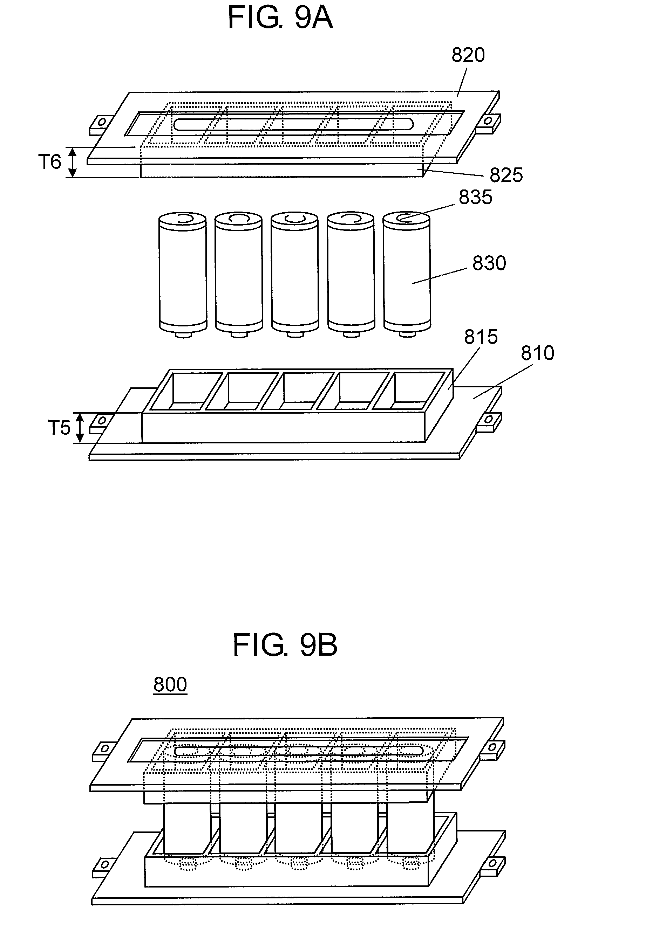

Hereinafter, a battery module in accordance with a fifth exemplary embodiment of the present invention is described in detail with reference to Figs. 9A and 9B.

Fig. 9A is an exploded perspective view of a battery module in accordance with the fifth exemplary embodiment of the present invention. Fig. 9B is a perspective view of the battery module in accordance with the fifth exemplary embodiment of the present invention.

As shown in Figs. 9A and 9B, battery module 800 includes first enclosure 810 and second enclosure 820 made of an insulating resin material such as polycarbonate resin, and a plurality of batteries 830 incorporated in the first and second enclosures. Battery 830 has a vent hole at the positive side and explosion-proof valve 835 formed of, for example, a C-shaped engraved part at the negative side. A plurality of batteries 830 are arranged so that batteries 830 are connected in parallel. First partition member 815 of first enclosure 810 is provided at the position facing the vent holes of batteries 830, and second partition member 825 of second enclosure 820 is provided at the position facing explosion-proof valves 835 of batteries 830. It is important that height T5 of first partition member 815 facing the vent holes of batteries 830 and height T6 of second partition member 825 facing explosion-proof valves 835 of batteries 830 are not lower than the height in which the vent hole and explosion-proof valve 835 of battery 830 are opened.

In this case, first enclosure 810, second enclosure 820, first partition member 815 and second partition member 825 are formed of the same heat-resistant members as those of first enclosure 110 and first partition member 115 of battery module 100. Note here that other components are the same as those of battery module 100, the description thereof is omitted herein.

According to this exemplary embodiment, even if the temperature of the battery becomes higher due to abnormality and a high-temperature gas is emitted from the vent hole or the explosion-proof valve, the first and second partition members can prevent the high temperature gas from directly striking the surrounding batteries. As a result, it is possible to effectively prevent surrounding batteries from becoming higher in temperature consecutively. Thus, a battery module having safety and reliability can be achieved.

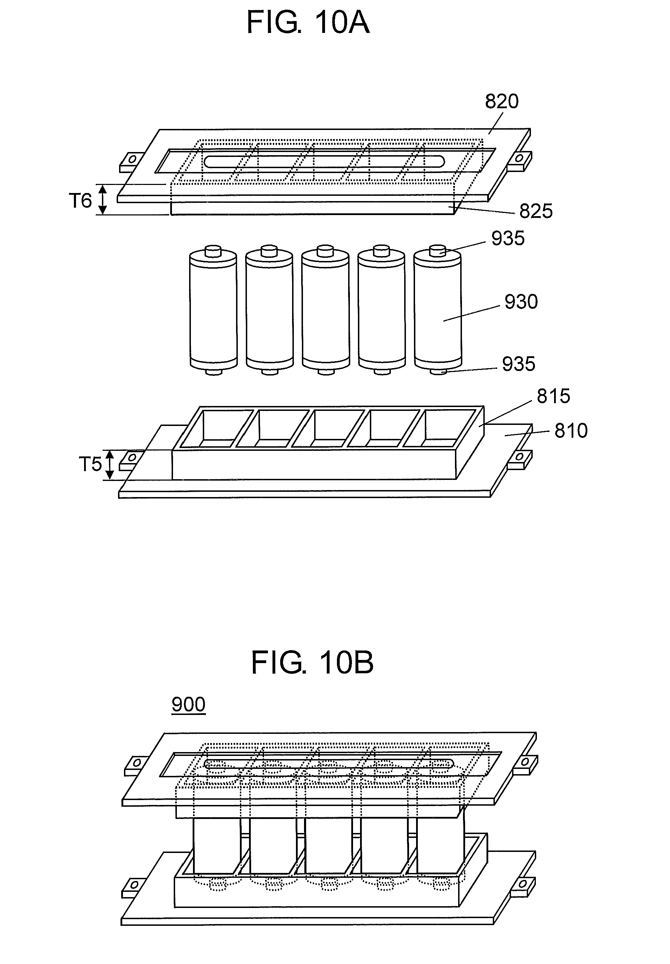

Hereinafter, another example of a battery module in accordance with the fifth exemplary embodiment of the present invention is described with reference to Figs. 10A and 10B.

Fig. 10A is an exploded perspective view of another example of a battery module in accordance with the fifth exemplary embodiment of the present invention. Fig. 10B is a perspective view of the example of the battery module in accordance with the fifth exemplary embodiment of the present invention.

As shown in Fig. 10A, battery module 900 has a different configuration from the above-mentioned battery module 800 in that both the positive side and the negative side of battery 930 are caulked via sealing plates. Battery 930 has a configuration in which first partition member 815 of first enclosure 810 and second partition member 825 of second enclosure 820 accommodate at least the position of vent holes 935 provided on both sides of the battery.

According to the example of this exemplary embodiment, the same effect can be obtained when the battery has a different structure.

Note here that the above-mentioned exemplary embodiment describes an example in which the total heights of the first and second partition members are lower than the height of the battery. However, the configuration is not necessarily limited to this example. For example, the total heights of the first and second partition members may be equal to the height of the battery. At this time, it is preferable that air holes are provided on the side surfaces of the first and second partition members such that the air holes are not provided at positions where the batteries neighbor.

### SIXTH EXEMPLARY EMBODIMENT

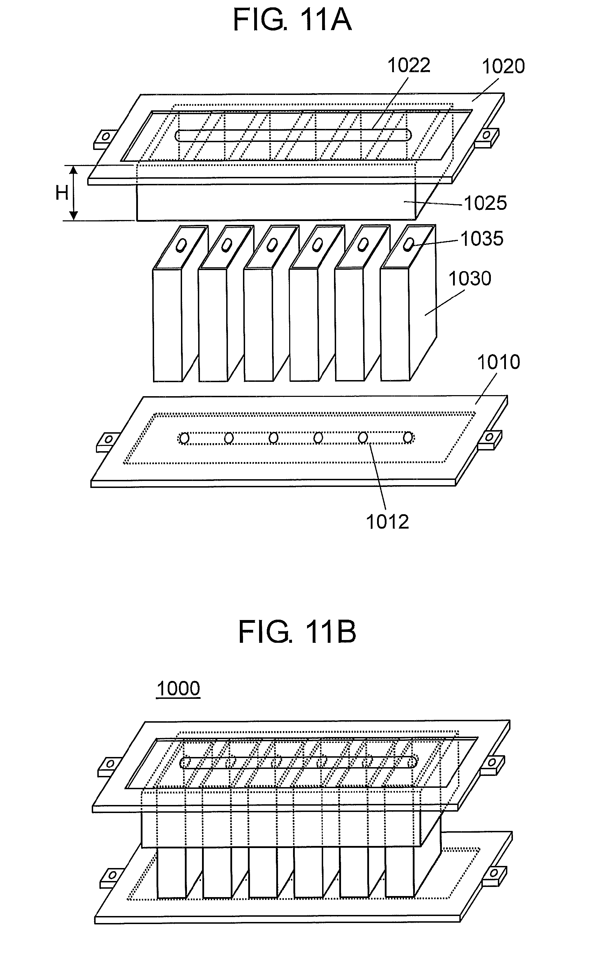

Hereinafter, a battery module in accordance with a sixth exemplary embodiment of the present invention is described in detail with reference to Figs. 11A and 11B.

Fig. 11A is an exploded perspective view of a battery module in accordance with the sixth exemplary embodiment of the present invention. Fig. 11B is a perspective view of the battery module in accordance with the sixth exemplary embodiment of the present invention.

As shown in Fig. 11A, battery module 1000 is different from the battery module in the first exemplary embodiment in that rectangular-shaped batteries 1030 are used as batteries to be accommodated. In this case, battery 1030 has vent mechanism 1035 in vicinity of the central part thereof.

As shown in Fig. 11A, a plurality of batteries 1030 is accommodated in second partition member 1025 of second enclosure 1020 at the vent mechanism 1035 side thereof and batteries 1030 are connected in parallel via second connection terminal 1022. In addition, first connection terminal 1012 of first enclosure 1010 and the battery cases of batteries 1030 are connected to each other. Thus, battery module 1000 is configured. Height (depth) H of second partition member 1025 is not lower than the height capable of accommodating a part of vent mechanism 1035 of battery 1030 and not higher than the height of battery 1030. When the battery has, for example, a width of 34 mm and a height of 50 mm, height H is in the range of 2 mm ≤ H ≤ 52 mm.

According to this exemplary embodiment, when the battery has a different shape, that is, a rectangular shape, if the temperature of the battery becomes higher due to abnormality and a high-temperature gas is emitted from the vent mechanism, the second partition member can prevent the high-temperature gas from directly striking the surrounding batteries. As a result, it is possible to effectively prevent the surrounding batteries from becoming higher in temperature consecutively.

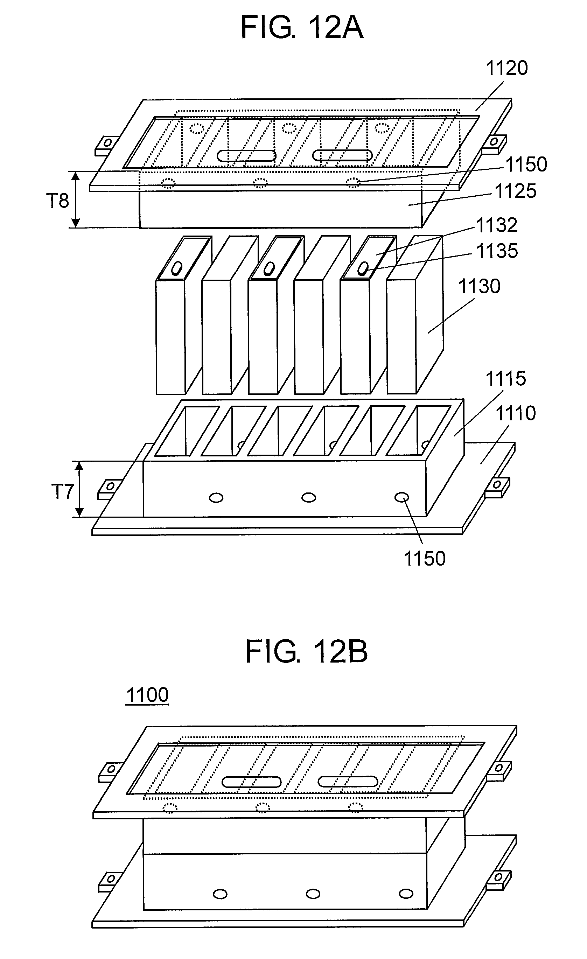

Hereinafter, another example of a battery module in accordance with the sixth exemplary embodiment of the present invention is described with reference to Figs. 12A and 12B.

Fig. 12A is an exploded perspective view of another example of a battery module in accordance with the sixth exemplary embodiment of the present invention. Fig. 12B is a perspective view of the example of the battery module in accordance with the sixth exemplary embodiment of the present invention.

As shown in Fig. 12A, battery module 1100 has a configuration in which rectangular batteries 1130 each having vent mechanism 1135 at a position apart from the central part of sealing plate 1132 are connected in series. First partition member 1115 and second partition member 1125 are provided on first enclosure 1110 and second enclosure 1120, respectively, at the positions facing vent mechanisms 1135 of batteries 1130. The total of height T7 of first partition member 1115 facing vent mechanism 1135 of battery 1130 and height T8 of second partition member 1125 is not lower than the height of battery 1130. Furthermore, air holes 1150 are provided in vicinity of the positions of vent mechanisms 1135 on the outer side surface of first partition member 1115 or second partition member 1125 such that the air holes are not provided on the positions where the batteries neighbor.

According to the example of this exemplary embodiment, the same effect as mentioned above can be obtained when the battery has a vent mechanism in different positions. Thus, a battery module having excellent safety and reliability can be achieved regardless of the arrangement of batteries.

The above-mentioned example of this exemplary embodiment describes an example in which the total heights of the first and second partition members are not lower than the height of the battery. However, the configuration is not necessarily limited to this example. For example, the total heights of the first and second partition members may be lower than the height of the battery. In this case, it is not particularly necessary to provide an air hole in the first partition member or the second partition member.

### SEVENTH EXEMPLARY EMBODIMENT

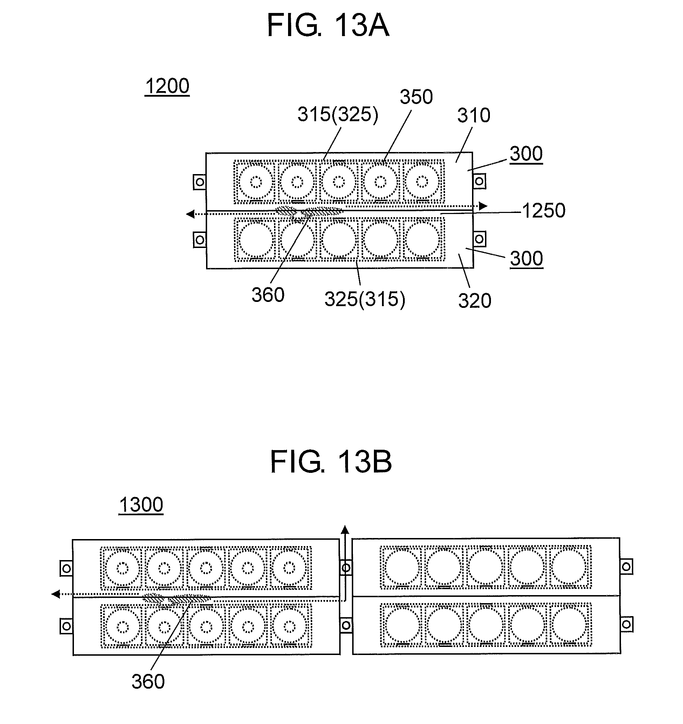

Hereinafter, a battery module in accordance with a seventh exemplary embodiment of the present invention is described in detail with reference to Figs. 13A and 13B.

Fig. 13A is a plan view showing a battery module seen from the direction in which batteries are accommodated in accordance with the seventh exemplary embodiment of the present invention, showing a state in which unit battery modules are connected in tandem in two stages. Fig. 13B is a plan view showing another battery module seen from the direction in which batteries are accommodated in accordance with the seventh exemplary embodiment of the present invention, showing a state in which unit battery modules are connected in tandem in two stages and in parallel in two rows. Note here that Figs. 13A and 13B show a state in which batteries and each partition member are shown as a transparent image so that the state can be understood easily.

As shown in Fig. 13A, battery module 1200 is formed by stacking battery modules 300 described in the second exemplary embodiment in tandem in two stages via the outer shapes of first enclosure 310 and second enclosure 320. Then, exhaust flow passage 1250 is formed in space between first enclosures 310 and second enclosures 320 and first partition members 315 and second partition members 325 in battery modules 300. Note here that when battery module 300 has air holes 350, it is preferable that air holes are provided in different positions between the battery modules stacked in tandem.

According to this exemplary embodiment, high-temperature gas 360, which is emitted from air hole 350 when the temperature of the battery becomes higher due to abnormality, can be exhausted to the outside via exhaust flow passage 1250 as shown by arrow in the drawing. Thus, it is possible to prevent high-temperature gas 360 from directly striking batteries inside the battery module or surrounding batteries of the facing battery modules.

Note here that as shown in Fig. 13B, battery module 1300 may be configured by connecting battery modules 1200 shown in Fig. 13A in parallel.

That is to say, a battery module can be configured by arbitrarily connecting unit battery modules in tandem or in parallel so that required voltage and volume can be satisfied.

Note here that in this exemplary embodiment, battery module 300 of the second exemplary embodiment is described as an example of a unit battery module. However, the configuration is not necessarily limited to this example. A battery module may be configured by combining battery modules of the above-mentioned exemplary embodiments as unit battery modules.

### EIGHTH EXEMPLARY EMBODIMENT

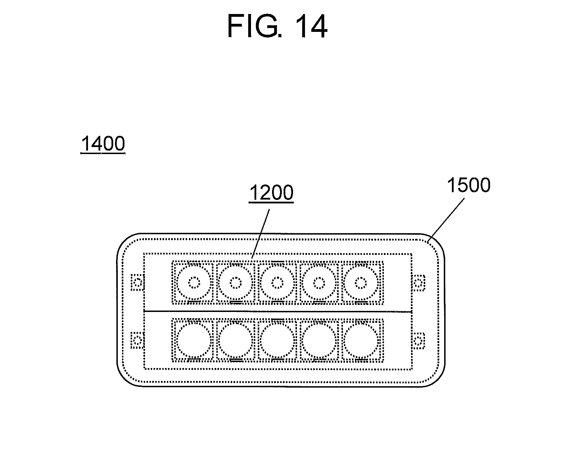

Hereinafter, a battery pack in accordance with an eighth exemplary embodiment of the present invention is described in detail with reference to Fig. 14.

Fig. 14 is a perspective plan view of a battery pack in accordance with the eighth exemplary embodiment. As shown in Fig. 14, battery pack 1400 has a configuration in which, for example, battery module 1200 of the seventh exemplary embodiment is accommodated in exterior enclosure 1500. Exterior enclosure 1500 has at least an outer connection terminal (not shown) for being connected to an external apparatus, device, or the like. The external connection terminal is connected to the connection terminal of battery module 1200.

According to this exemplary embodiment, a battery pack having excellent reliability and safety and having a high versatility can be achieved.

Note here that the first to eighth exemplary embodiments describe examples in which the outer shapes of the first and second enclosures are larger than the outer shapes of the first and second partition members. However, the configuration is not limited to these examples. For example, the outer shape of the first enclosure may be equal to that of the first partition member. The outer shape of the second enclosure may be equal to that of the second partition member. Thus, a smaller and lighter battery module can be achieved.

Furthermore, the configurations specified in each of the exemplary embodiments can be combined with each other.

### INDUSTRIAL APPLICABILITY

The present invention is useful in the field of battery modules or battery packs as power sources of, for example, automobiles, bicycles, power tools, and the like, which require high reliability and safety.

## Claims

1. A battery module comprising:
a first enclosure;
a second enclosure;
a plurality of batteries each having a vent hole and being accommodated between the first enclosure and the second enclosure, and
a first partition member individually accommodating the batteries at a position facing the vent holes of the batteries in at least one of the first enclosure and the second enclosure.

2. The battery module according to claim 1,
wherein a height of the first partition member is not lower than a height for accommodating the vent hole of the battery and not higher than a height of the battery.

3. The battery module according to claim 1, further comprising a second partition member individually accommodating the batteries so as to correspond to the first partition member at a position facing an opposite side of the vent holes of the batteries in at least one of the first enclosure and the second enclosure.

4. The battery module according to claim 1, further comprising a second partition member accommodating the first partition member so as to correspond to the first partition member at a position facing an opposite side of the vent holes of the batteries in at least one of the first enclosure and the second enclosure.

5. The battery module according to one of claim 3 or 4,
wherein at least one of the first partition member and the second partition member is provided with an air hole.

6. The battery module according to claim 3,
wherein a total of a height of the first partition member and a height of the second partition member is not higher than the height of each of the batteries, and a gap between the height of each of the battery and the total of the height of the first partition member and the height of the second partition member functions as an air hole.

7. The battery module according to claim 1,
wherein at least one of the first enclosure and the second enclosure is formed of a heat-resistant member.

8. The battery module according to claim 7,
wherein the heat-resistant member is formed by coating a metal material with insulating resin.

9. A battery module comprising unit battery modules each configured as same as the battery module according to claim 1, the unit battery modules being connected in tandem or in parallel.

10. A battery pack comprising the battery module according to claim 1 and an exterior enclosure accommodating the battery module.
